(19) Europäisches Patentamt
European Patent Office
Office européen des brevets

(11) EP 2 942 367 B1

# (12) EUROPÄISCHE PATENTSCHRIFT

(45) Veröffentlichungstag und Bekanntmachung des Hinweises auf die Patenterteilung:
**11.07.2018 Patentblatt 2018/28**

(21) Anmeldenummer: **14166976.2**

(22) Anmeldetag: **05.05.2014**

(51) Int Cl.:
*C08K 3/00* (2018.01) *C08K 7/14* (2006.01)
*C08K 3/34* (2006.01) *C08K 3/22* (2006.01)
*C08K 3/38* (2006.01) *C08L 67/02* (2006.01)

## (54) Polyester Zusammensetzungen

Polyester compounds

Compositions de polyester

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.11.2015 Patentblatt 2015/46**

(73) Patentinhaber: **LANXESS Deutschland GmbH**
**50569 Köln (DE)**

(72) Erfinder:
- **Endtner, Jochen**
**50679 Köln (DE)**
- **Immel, Timo**
**41539 Dormagen (DE)**
- **Bienmüller, Matthias**
**47803 Krefeld (DE)**

(56) Entgegenhaltungen:
**WO-A1-01/81470**

- **DATABASE WPI Week 201279 Thomson Scientific, London, GB; AN 2012-Q12960 XP002730701, -& JP 2012 229315 A (MITSUBISHI ENG-PLASTICS CORP) 22. November 2012 (2012-11-22)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 942 367 B1

**Beschreibung**

Die Erfindung betrifft Polyester basierte Zusammensetzungen mit erhöhter Glühdrahtbeständigkeit enthaltend wenigstens einen Füllstoff zur Verbesserung der Wärmeleitfähigkeit, bevorzugt Aluminiumoxid, Bornitrid und Aluminiumsilikat, besonders bevorzugt Aluminiumsilikat, insbesondere bevorzugt Aluminiumsilikat mit triklin-pinakoidaler Kristallstruktur, deren Herstellung sowie daraus herzustellender Erzeugnisse für den Elektro- und Elektronikmarkt, bevorzugt Haushaltsgeräte sowie die Verwendung von Aluminiumoxid, Bornitrid oder Aluminiumsilikat, besonders bevorzugt von Aluminiumsilikat, insbesondere bevorzugt von Aluminiumsilikat mit triklin-pinakoidaler Kristallstruktur, zur Verbesserung der Glühdrahtbeständigkeit von Erzeugnissen für den Elektro- und Elektronikmarkt, bevorzugt von Haushaltsgeräten.

Thermoplastische Zusammensetzungen basierend auf Polyestern werden unter anderem aufgrund ihrer hervorragenden Eigenschaften bezüglich Festigkeit, Zähigkeit, guten Oberflächen und der sehr guten Beständigkeit gegen Lösungsmittel in vielfältigen Anwendungen, vom Automobilsektor bis hin zu Anwendungen im Elektro- und Elektronikbereich eingesetzt. Insbesondere für strom-und spannungsführende Komponenten in Haushaltsgeräten müssen die dafür eingesetzten nichtmetallischen, isolierenden Materialien die normativen Anforderungen hinsichtlich ihrer Glühdrahtbeständigkeit nach IEC60335-1 erfüllen, wenn der Abstand des Materials zu stromführenden Teilen 3 mm unterschreitet.

In beaufsichtigten Haushaltsgeräten mit Strömen oberhalb 0,5 A müssen die nichtmetallischen, isolierenden Werkstoffe bzw. die daraus gefertigten Erzeugnisse einen GWFI (Glow Wire Flammability Index = IEC 60695-2-12) von mindestens 750°C erzielen. Der GWFI wird nach IEC60695-2-12 an einer Prüfplatte (Rundscheibe) gemessen und ist ein Maß für das Selbstverlöschungsverhalten einer Probe bei Einwirkung eines glühenden Drahtes. Der Probekörper wird 30 Sekunden lang mit einer Kraft von einem Newton gegen einen aufgeheizten Glühdraht gepresst. Die Eindringtiefe des Glühdrahtes ist auf 7 mm begrenzt. Der Test ist bestanden, wenn der Probekörper nach Entfernen des Glühdrahtes weniger als 30 Sekunden nachbrennt und wenn sich ein unter dem Probekörper liegendes Seidenpapier nicht entzündet.

Alternativ sind aber auch Prüfungen nach GWT (Glow Wire Temperature Test = IEC 60695-2-11) am Fertigteil möglich. Für beaufsichtigte Haushaltsgeräte mit Strömen oberhalb 0,5 A muss für die nichtmetallischen, isolierenden Werkstoffe in diesem Fall ein GWT von mindestens 750°C bestanden werden.

Für unbeaufsichtigte Haushaltsgeräte müssen hierzu der GWFI (Glow Wire Flammability Index = IEC 60695-2-12) bei 850°C und der GWIT (Glow Wire Ignition Temperature = IEC 60695-2-13) bei 775°C bestanden werden.

Der GWIT nach IEC 60695-2-13 wird an einer Prüfplatte (Rundscheibe) gemessen und ist ein Maß für die Entzündung eines Kunststoffes bei Einwirkung beispielsweise eines glühenden Drahtes oder eines überhitzten Widerstandes. Bei der Bestimmung der Zündtemperatur darf sich der Probekörper während der gesamten Prüfung nicht entzünden. Entzündung ist definiert als eine Branderscheinung von größer fünf Sekunden. Als GWIT wird dann die Temperatur angegeben, die 25°C höher als die Temperatur ist, bei der noch keine Entzündung stattfindet. Der GWIT wird vom Hersteller der Materialien angegeben und ist auf der Yellow Card der Underwriter Laboratories (UL) gelistet. Alternativ zum GWIT sind auch Prüfungen nach GWT (Glow Wire Temperature Test = IEC 60695-2-13) am Fertigteil möglich.

**Stand der Technik**

Um die Anforderungen des GWFI und des GWIT zu erfüllen, werden Polyester basierte Zusammensetzungen bzw. auf Polyestern basierende thermoplastische Formmassen mit Flammschutzmitteln ausgerüstet. Bevorzugt werden hierzu halogenhaltige Flammschutzmittel eingesetzt. Allerdings sind diese meist auf bromierten Flammschutzmitteln beruhenden Formmassen ökologisch bedenklich und erfüllen insbesondere den geforderten GWIT meist nicht. Auch andere im Elektro- und Elektronikbereich wichtige Eigenschaften wie hohe Kriechstromfestigkeiten (CTI-A) sowie niedrige Rauchgasdichten können kaum erfüllt werden, weshalb heute bevorzugt halogenfreie Flammschutzmittel in Formmassen eingesetzt werden.

So beschreibt WO2006/117087 A1 Polymerzusammensetzungen mit einem auf Stickstoff basierenden organischen Flammschutzmittel und einem Formtrennmittel sowie gegebenenfalls mit einem phosphorhaltigen Flammschutzmittel, welche die oben genannten normativen Anforderungen für unbeaufsichtigte Haushaltsgeräte nach IEC 60695-2-13 bestehen.

WO2010/080491 A1 beschreibt Mischungen von Flammschutzmitteln basierend auf einem Phosphinatsalz sowie Phosphonatoligomeren, Polymeren und einem Melaminderivat. Beim Einsatz in PBT (Polybutylenterephthalat) konnten durch den Einsatz phosphorhaltiger Flammschutzmittel Werte für den GWIT von $\geq$ 775°C erhalten werden.

In WO03/018680 A2 werden Formmassen basierend auf PBT, einem Stickstoff enthaltenden Flammschutzmittel sowie einem Phosphor enthaltenden Flammschutzmittel vorgestellt, welche nach IEC695-2-1/2 einen GWT von 960°C bestehen.

Nachteilig an der Verwendung halogenfreier Flammschutzmittel ist insbesondere deren niedrige Zersetzungstemperatur und damit einhergehend ein kleines Verarbeitungsfenster von halogenfreien Flammschutzmitteln enthaltenden Formmassen in der Verarbeitung zu Erzeugnissen, insbesondere im Spritzguss oder in der Extrusion. Des Weiteren sind phosphorhaltige Flammschutzmittel nur durch eine energieintensive Herstellung erhältlich. Auch aus ökologischen Gründen wäre deshalb ein Verzicht auf diese zwar halogenfreien, jedoch phosphorhaltigen Flammschutzmittel wünschenswert.

**Aufgabe**

Aufgabe der vorliegenden Erfindung war es deshalb, Polyester basierte Zusammensetzungen zur Verwendung in Erzeugnissen für den Elektro- und Elektronikmarkt, bevorzugt zur Herstellung von Haushaltsgeräten zur Verfügung zu stellen, die ohne Einsatz der aus dem Stand der Technik bekannten Halogen- oder Phosphor basierten Flammschutzmittel bereits die normativen Anforderungen nach IEC60335-1 erfüllen. Überraschenderweise wurde gefunden, dass Polyester Zusammensetzungen enthaltend wenigstens Aluminiumsilikat mit triklin-pinakoidaler Kristallstruktur die normativen Anforderungen nach IEC60335-1 erfüllen, ohne dass zusätzliche aus dem Stand der Technik bekannte Flammschutzmittel eingesetzt werden müssen und die aufgrund ihrer sehr guten Glühdrahtbeständigkeit in Kombination mit einem weiten Verarbeitungsfenster sich hervorragend zur Herstellung von Erzeugnissen für den Elektro- und Elektronikmarkt, bevorzugt zur Herstellung von Haushaltsgeräten eignen.

**Erfindung**

Lösung der Aufgabe und somit **Gegenstand der Erfindung** sind deshalb Zusammensetzungen enthaltend

a) wenigstens ein Polyalkylenterephthalat, bevorzugt Polybutylenterephthalat (PBT), Polyethylenterephthalat (PET) oder Blends aus PBT und PET, besonders bevorzugt Blends aus PBT und PET worin der PET Anteil bezogen auf die Summe aller enthaltenen Polyester im Bereich von 50 bis 99,9 Gew-% liegt,
b) wenigstens Aluminiumsilikat mit triklin-pinakoidaler Kristallstruktur, und
c) Glasfasern.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind.
Bevorzugter Gegenstand der vorliegenden Erfindung sind Zusammensetzungen enthaltend

a) 24,9 bis 89,9 Gew.-%, bevorzugt 34.9 bis 84.9 Gew.-%, besonders bevorzugt 44,9 bis 84,9 Gew.-%, wenigstens eines Polyalkylenterephthalats, bevorzugt PBT, PET oder Blends aus PBT und PET, besonders bevorzugt Blends aus PBT und PET, insbesondere Blends aus PBT und PET worin der PET Anteil bezogen auf die Summe aller enthaltenen Polyester im Bereich von 50 bis 99,9 Gew-% liegt,
b) 10 bis 75 Gew.-%, bevorzugt 15 bis 65 Gew.-%, besonders bevorzugt 25 bis 65 Gew.-% wenigstens Aluminiumsilikat mit triklin-pinakoidaler Kristallstruktur, und
c) 0,1 bis 50 Gew.-%, bevorzugt 10 bis 40 Gew.-%, besonders bevorzugt 10 bis 30 Gew.-% Glasfasern,
mit der Maßgabe, dass die Summe aller Gewichtsprozente stets 100 ergibt.
Die Zubereitung der erfindungsgemäßen Zusammensetzungen für eine weitere Nutzung erfolgt durch Mischen der als Edukte einzusetzenden Komponenten a) bis c) in wenigstens einem Mischwerkzeug. Hierdurch werden als Zwischenprodukte, auf den erfindungsgemäßen Zusammensetzungen basierende, Formmassen erhalten. Diese Formmassen können entweder ausschließlich aus den Komponenten a) bis c) bestehen, oder aber zusätzlich zu den Komponenten a) bis c) noch weitere Komponenten enthalten. In diesem Fall sind die Komponenten a) bis c) im Rahmen der angegebenen Mengenbereiche so zu variieren, dass die Summe aller Gewichtsprozente stets 100 ergibt.
In einer Ausführungsform enthalten die erfindungsgemäßen Zusammensetzungen zusätzlich zu den Komponenten a) bis c) noch
d) 0,01 bis 5 Gew.-%, bevorzugt 0,05 bis 4 Gew.-%, besonders bevorzugt 0,1 bis 3 Gew.-%, jeweils bezogen auf die Gesamtzusammensetzung, wenigstens eines Phosphitstabilisators, wobei die Komponenten a), b), c) soweit reduziert werden, dass die Summe aller Gewichtsprozente stets 100 ergibt.
In einer Ausführungsform enthalten die erfindungsgemäßen Zusammensetzungen zusätzlich zu den Komponenten a) bis d) oder anstelle von d) noch
e) 0,01 bis 10 Gew.%, bezogen auf die Gesamtzusammensetzung, wenigstens eines Additivs zur Verbesserung der Fließfähigkeit, auch als Fließhilfsmittel, Fließmittel, Fließhilfe oder inneres Gleitmittel bezeichnet, wobei die übrigen Komponenten soweit reduziert werden, dass die Summe aller Gewichtsprozente stets 100 ergibt.
In einer Ausführungsform enthalten die erfindungsgemäßen Zusammensetzungen zusätzlich zu den Komponenten a) bis d) oder anstelle von d) und/oder e) noch

f) 0,01 bis 15 Gew.-%, bevorzugt 0,01 bis 10 Gew.-%, besonders bevorzugt 0,01 bis 5 Gew.-%, jeweils bezogen auf die Gesamtzusammensetzung, Talkum, bevorzugt mikrokristallines Talkum, wobei die übrigen Komponenten soweit reduziert werden, dass die Summe aller Gewichtsprozente stets 100 ergibt.

In einer Ausführungsform enthalten die erfindungsgemäßen Zusammensetzungen zusätzlich zu den Komponenten a) bis e) oder anstelle der Komponenten d) und/oder e) und/oder f) noch

g) 0,01 bis 15 Gew.-%, bevorzugt 0,01 bis 10 Gew.-%, besonders bevorzugt 0,01 bis 5 Gew.-%, jeweils bezogen auf die Gesamtzusammensetzung, wenigstens eines Entformungsmittels, wobei die übrigen Komponenten soweit reduziert werden, dass die Summe aller Gewichtsprozente stets 100 ergibt.

In einer Ausführungsform enthalten die erfindungsgemäßen Zusammensetzungen zusätzlich zu den Komponenten a) bis g) oder anstelle der Komponenten d) und/oder e) und/oder f) und/oder g) noch

h) 0,01 bis 45 Gew.-%, bevorzugt 0,01 bis 30 Gew.-%, besonders bevorzugt 0,01 bis 15 Gew.-%, jeweils bezogen auf die Gesamtzusammensetzung, wenigstens eines sonstigen, zu den Komponenten c) bis g) unterschiedlichen Additivs, wobei die übrigen Komponenten soweit reduziert werden, dass die Summe aller Gewichtsprozente stets 100 ergibt.

**Komponente a)**

Erfindungsgemäß ist Komponente a) wenigstens ein Polyalkylenterephthalat, bevorzugt wenigstens Polybutylenterephthalat (PBT), Polyethylenterephthalat (PET) oder ein Blend aus PBT und PET, insbesondere Blends aus PBT und PET worin der PET Anteil bezogen auf die Summe aller enthaltenen Polyester im Bereich von 50 bis 99,9 Gew-% liegt.

Die erfindungsgemäß einzusetzenden Polyalkylenterephthalate sind Reaktionsprodukte aus aromatischen Dicarbonsäuren oder ihrer reaktionsfähigen Derivate, bevorzugt Dimethylestern oder Anhydriden, und aliphatischen, cycloaliphatischen oder araliphatischen Diolen und Mischungen dieser Edukte. Sie lassen sich aus Terephthalsäure (oder ihren reaktionsfähigen Derivaten) und den jeweiligen aliphatischen Diolen mit 2 bzw. 4 C-Atomen bzw. dem cycloaliphatischen 1,4-Bis(hydroxymethyl)-cyclohexan nach bekannten Methoden herstellen (Kunststoff-Handbuch, Bd. VIII, S. 695 - 743 ff, Karl-Hanser-Verlag, München 1973).

Bevorzugt als Polyester einzusetzendes PET enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykolreste.

Bevorzugt als Polyester einzusetzendes PBT enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Butandiol-1,4-glykolreste.

Die bevorzugt einzusetzenden und oben genannten Polyester PBT und PET können neben Terephthalsäureresten bis zu 20 Mol-% Reste anderer aromatische Dicarbonsäuren mit 8 bis 14 C-Atomen oder Reste aliphatischer Dicarbonsäuren mit 4 bis 12 C-Atomen enthalten, bevorzugt Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, oder Cyclohexandicarbonsäure.

Die bevorzugt einzusetzenden und oben genannten Polyester PBT und PET können neben Ethylen- bzw. Butandiol-1,4-glykolresten bis zu 20 Mol-% andere aliphatische Diole mit 3 bis 12 C-Atomen oder cycloaliphatische Diole mit 6 bis 21 C-Atomen enthalten. Bevorzugt sind Reste von Propandiol-1,3, 2-Ethylpropandiol-1,3, Neopentylglykol, Pentandiol-1,5, Hexandiol-1.6, 3-Methylpentandiol-2,4, 2-Methylpentandiol-2,4, 2,2,4-Trimethylpentandiol-1,3, 1,6,2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-β-hydroxyethoxyphenyl)-propan oder 2,2-Bis-(4-hydroxypropoxyphenyl)-propan (DE-A 24 07 674 (= US-A 4 035 958), DE-A 24 07 776, DE-A 27 15 932 (=US-A 4 176 224)).

In einer Ausführungsfom können die bevorzugt einzusetzenden und oben genannten Polyester durch Einbau relativ kleiner Mengen 3- oder 4-wertiger Alkohole oder 3- oder 4-basischer Carbonsäuren, wie sie z.B. in der DE-A 19 00 270 (= US-A 3 692 744) beschrieben sind, verzweigt werden. Bevorzugte Verzweigungsmittel sind Trimesinsäure, Trimellitsäure, Trimethylolethan und Trimethylolpropan und Pentaerythrit.

Die erfindungsgemäß bevorzugt einzusetzenden und oben genannten Polyester besitzen bevorzugt eine intrinsische Viskosität im Bereich von 30 $cm^3/g$ bis 150 $cm^3/g$, besonders bevorzugt im Bereich von 40 $cm^3/g$ bis 130 $cm^3/g$, insbesondere bevorzugt im Bereich von 50 $cm^3/g$ bis 110 $cm^3/g$ jeweils gemessen in Phenol/o-Dichlorbenzol (1:1 Gew.-Teile) bei 25°C mittels eines Ubbelohde Viskosimeters.

Die intrinsische Viskosität [η] wird auch Grenzviskositätszahl oder Staudinger Index genannt, da sie erstens eine Stoffkonstante ist und zweitens in einem Zusammenhang mit dem Molekulargewicht steht. Sie gibt an, wie die Viskosität des Lösungsmittels durch den gelösten Stoff beeinflusst wird. Zur Bestimmung der intrinsischen Viskosität wird die folgende Definition verwendet:

$$[\eta] = \lim_{c \to 0} \frac{\eta_{sp}}{c} = \lim_{c \to 0} \frac{1}{c} \ln\left(\frac{\eta}{\eta_0}\right)$$

wobei c die Konzentration des gelösten Stoffs in g/ml, $\eta_0$ die Viskosität des reinen Lösungsmittels und

$\eta_{sp} = \frac{\eta}{\eta_0} - 1$ die spezifische Viskosität ist.

Wird ein Blend aus PET und PBT eingesetzt, so wird ein Blend bevorzugt, worin der PET Anteil bezogen auf die Summe aller in Komponente a) enthaltenen Polyester im Bereich von 50 bis 99,9 Gew-% liegt,

**Komponente b)**

Als Aluminiumsilikat wird triklin pinakoidales Aluminiumsilikat eingesetzt. Das im Rahmen der vorliegenden Erfindung bevorzugt einzusetzende Mineral Kyanit [CAS No. 1302-76-7] ist ein in triklin pinakoidaler Kristallform anfallendes Aluminiumsilikat mit der chemischen Zusammensetzung $Al_2[OSiO_4]$. Kyanit kann mit Eisen- und Chrom-Verbindungen verunreinigt sein. Erfindungsgemäß bevorzugt wird das Aluminiumsilikat bzw. Kyanit mit weniger als 1 Gew.-%, besonders bevorzugt mit weniger als 0,5 Gew.-% Verunreinigungen eingesetzt.

Bevorzugt wird das Aluminiumsilikat, bevorzugt $Al_2[OSiO_4]$ bzw. Kyanit, als Pulver eingesetzt. Bevorzugte Aluminiumsilikatpulver, bevorzugt $Al_2[OSiO_4]$ bzw. Kyanit Pulver weisen eine mittlere Partikelgröße $d_{50}$ von maximal 500 $\mu$m, bevorzugt eine mittlere Partikelgröße im Bereich von 0,1 bis 250 $\mu$m, besonders bevorzugt im Bereich von 0,5 bis 150 $\mu$m, ganz besonders bevorzugt im Bereich von 0,5 bis 70 $\mu$m auf (gemäß ASTM D 1921-89, Methode A), wodurch die feine Verteilung in den aus den erfindungsgemäßen Zusammensetzungen erhältlichen Formmassen und den daraus herzustellenden Erzeugnissen gewährleistet wird.

Die erfindungsgemäß bevorzugt zu verwendenden $Al_2[OSiO_4]$-Partikel bzw. Kyanit-Partikel können in unterschiedlichen Formen vorliegen, die durch das Aspektverhältnis beschrieben werden. Bevorzugt werden $Al_2[OSiO_4]$ -Partikel bzw. Kyanit Partikel mit einem Aspektverhältnis im Bereich von 1 bis 100, besonders bevorzugt im Bereich von 1 bis 30, ganz besonders bevorzugt im Bereich von 1 bis 10 eingesetzt.

Die erfindungsgemäß zu verwendenden Aluminiumsilikat Partikel, vorzugsweise $Al_2[O\ SiO_4]$-Partikel, bzw. Kyanit-Partikel, können mit und/oder ohne Oberflächenmodifizierung eingesetzt werden. Als Oberflächenmodifizierung werden organische Kopplungsmittel bezeichnet, welche die Anbindung der Partikel an die thermoplastische Matrix verbessern sollen. Als Oberflächenmodifizierung werden bevorzugt Aminosilane oder Epoxysilane eingesetzt. In einer besonders bevorzugten Ausführungsform werden die erfindungsgemäß zu verwendenden Aluminiumsilikat Partikel, vorzugsweise $Al_2[OSiO_4]$-Partikel, bzw. Kyanit-Partikel, ohne Oberflächenmodifizierung eingesetzt. Anbieter von Kyanit ist beispielsweise Quarzwerke GmbH, Frechen, die das Kyanit als $Al_2[OSiO_4]$ unter Silatherm® vertreiben. Das Aluminiumsilikat kann auch als Mischung mit Bornitrid oder Aluminiumoxid eingesetzt werden. Insbesondere bevorzugt wird Aluminiumsilikat allein eingesetzt.

Das Aluminiumoxid und das Bornitrid werden vorzugsweise in Form feiner Nadeln, Plättchen, Kugeln oder unregelmäßig geformter Partikel eingesetzt. Bevorzugte Teilchengrößen des Aluminiumoxids und des Bornitrids liegen im Bereich von 0,1 bis 300 $\mu$m, besonders bevorzugt im Bereich von 0,5 bis 100 $\mu$m. Die thermische Leitfähigkeit des Aluminiumoxids bzw. des Bornitrids liegt bevorzugt im Bereich von 10 bis 400 W/mK, besonders bevorzugt im Bereich von 30 bis 250 W/mK. Geeignete Beispiele für Aluminiumoxid sind das Martoxid® MPS-2 [CAS No. 1344-28-1] der Martinswerk GmbH, Bergheim, Deutschland. Die als Komponente b) einzusetzenden Bornitride [CAS No. 10043-11-5] sind zum Beispiel als BOPONID® bei der zu 3M, St.Paul/ Minnesota, USA gehörenden ESK Ceramics GmbH & Co. KG, Kempten, Deutschland erhältlich.

**Komponente c)**

Gemäß "http://de.wikipedia.org/wiki/Faser-Kunststoff-Verbund" unterscheidet man geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden in der Spritzgusstechnik eingesetzt und können direkt mit einem Extruder verarbeitet werden. Langfasern können ebenfalls noch in Extrudern verarbeitet werden. Sie finden in großem Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 $\mu$m liegt.

Erfindungsgemäß umfasst der Begriff Glasfasern die Kurzglasfasern, die Langglasfasern und die Endlosglasfasern mit den oben angegebenen Längen, wobei sich die Längenangaben auf die Ausgangslänge, also vor jeder Verarbeitung, beziehen.

Die Glasfasern der Komponente c) können bedingt durch die Verarbeitung zur Formmasse oder zum Erzeugnis in der Formmasse oder im Erzeugnis einen kleineren d97-bzw. d50-Wert aufweisen, als die ursprünglich eingesetzten Glasfasern. So liegt der arithmetische Mittelwert der Glasfaserlänge nach der Verarbeitung häufig nur noch im Bereich von 150 μm bis 300 μm.

Bevorzugte als Komponente c) einzusetzende Glasfasern haben einen Faserdurchmesser im Bereich von 7 bis 18 μm, besonders bevorzugt im Bereich von 9 bis 15 μm. Erfindungsgemäß bevorzugt werden als Komponente c) geschnittene Langglasfasern mit einer Ausgangslänge im Bereich von 1 bis 50 mm, besonders bevorzugt im Bereich von 1 bis 10 mm, ganz besonders bevorzugt im Bereich von 2 bis 7 mm eingesetzt.

Die Glasfasern der Komponente c) werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt.

Besonders bevorzugte Haftvermittler auf Silanbasis für die Vorbehandlung sind Silanverbindungen der allgemeine Formel (I)

$$(X\text{-}(CH_2)_q)k\text{-}Si\text{-}(O\text{-}CrH_{2r+1})4\text{-}k \qquad (I)$$

worin

X für $NH_2$-, Carboxyl-, HO- oder

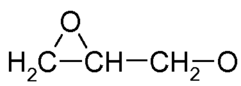

steht,

q für eine ganze Zahl von 2 bis 10, bevorzugt 3 bis 4 steht,

r für eine ganze Zahl von 1 bis 5, bevorzugt 1 bis 2 steht und

k für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X (siehe Formel (I)) eine Glycidyl- oder eine Carboxylgruppe enthalten, wobei Carboxylgruppen insbesondere ganz besonders bevorzugt sind.

Für die Ausrüstung der als Komponente c) einzusetzenden Glasfasern wird der Haftvermittler, bevorzugt die Silanverbindungen gemäß Formel (I), bevorzugt in Mengen von 0,05 bis 2 Gew.-%, besonders bevorzugt in Mengen von 0,25 bis 1,5 Gew.-% und ganz besonders bevorzugt in Mengen von 0,5 bis 1 Gew.-%, jeweils bezogen auf 100 Gew.-% Komponente c), eingesetzt.

Gemäß "http://www.r-g.de/wiki/Glasfasern" werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:

- E-Glas, das meistverwendete Material mit optimalem Preis-Leistungsverhältnis (E-Glas von R&G)
- H-Glas, Hohlglasfasern für reduziertes Gewicht (R&G Glashohlfasergewebe 160 g/m2 und 216 $g/m^2$)
- R, S-Glas, für erhöhte mechanische Anforderungen (S2-Glas von R&G)
- D-Glas, Borsilicatglas für erhöhte elektrische Anforderungen
- C-Glas, mit erhöhter chemischer Widerstandsfähigkeit

- Quarzglas, mit hoher Temperaturbeständigkeit

Weitere Beispiele finden sich unter "http://de.wikipedia.org/wiki/Glasfaser". Für die Kunststoffverstärkung haben E-Glasfasern die größte Bedeutung erlangt. E steht für Elektro-Glas, da es ursprünglich vor allem in der Elektroindustrie eingesetzt wurde. Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglase eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z.B. Alu-Legierungen), wobei das spezifische Gewicht von Laminaten niedriger ist, als das der Metalle. E-Glasfasern sind unbrennbar, hitzefest bis ca. 400 °C und beständig gegen die meisten Chemikalien und Witterungseinflüsse.

**Komponente d)**

Erfindungsgemäß wird als Komponente d) wenigstens ein Phosphitstabilisator eingesetzt. Bevorzugt wird wenigstens ein Phosphitstabilisator der Reihe Tris(2,4-ditert-butylphenyl)phosphit (Irgafos® 168, BASF SE, CAS 31570-04-4), Bis(2,4-di-tert-butylphenyl)pentaerythritol-diphosphit (Ultranox® 626, Chemtura ,CAS 26741-53-7), Bis(2,6-di-ter-butyl-4-methylphenyl)pentaerythritol-diphosphit (ADK Stab PEP-36, Adeka, CAS 80693-00-1), Bis(2,4-dicumylphenyl)pentaerythritol-diphosphit (Doverphos® S-9228, Dover Chemical Corporation, CAS 154862-43-8), Tris(nonylphenyl)phosphit (Irgafos® TNPP, BASF SE, CAS 26523-78-4), (2,4,6-tri-t-butylphenol)2-butyl-2-ethyl-1,3-propan-ediol-phosphit (Ultranox® 641, Chemtura, CAS 161717-32-4) oder Hostanox® P-EPQ eingesetzt.

Insbesondere bevorzugt wird als Phosphitstabilisator wenigstens Hostanox® P-EPQ [CAS No. 119345-01-6] der Clariant International Ltd., Muttenz, Schweiz eingesetzt. Dieses enthält das erfindungsgemäß insbesondere ganz besonders bevorzugt als Komponente d) einzusetzende Tetrakis(2,4-di-tert-butylphenyl)-1,1-biphenyl-4,4'-diylbisphosphonit [CAS No. 38613-77-3].

**Komponente e)**

Als Fließhilfsmittel werden bevorzugt Copolymerisate aus mindestens einem α-Olefin mit mindestens einem Methacrylsäureester oder Acrylsäureester eines aliphatischen Alkohols eingesetzt. Besonders bevorzugt sind dabei Copolymerisate, bei denen das α-Olefin aus Ethen und/oder Propen aufgebaut ist und der Methacrylsäureester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel erfindungsgemäß geeignete Copolymerisate zeichnen sich neben der Zusammensetzung auch durch das niedrige Molekulargewicht aus. Dementsprechend sind für die erfindungsgemäß vor thermischem Abbau zu bewahrenden Zusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen ISO 1133 oder ASTM D 1238. Der MFI bzw. alle Angaben zum MFI im Rahmen der vorliegenden Erfindung beziehen sich bzw. wurden einheitlich nach ISO 1133 bei 190°C und einem Prüfgewicht von 2,16 kg gemessen bzw. bestimmt.

**Komponente f)**

Erfindungsgemäß wird als Komponente f) Talkum [CAS-No.14807-96-6] eingesetzt, bevorzugt mikrokristallines Talkum. Talkum, auch als Talk bezeichnet, ist ein Schichtsilikat mit der chemischen Zusammensetzung $Mg_3[Si_4O_{10}(OH)_2]$, das je nach Modifikation als Talk-1A im triklinen oder als Talk-2M im monoklinen Kristallsystem kristallisiert (http://de.wikipedia.org/wiki/Talkum). Erfindungsgemäß einzusetzendes Talkum [CAS No. 14807-96-6] kann beispielsweise als Mistron® R10 von Imerys Talc Group, Toulouse, Frankreich (Rio Tinto Group) bezogen werden.

**Komponente g)**

Erfindungsgemäß wird als Komponente g) wenigstens ein Entformungsmittel eingesetzt. Als bevorzugtes Entformungsmittel wird wenigstens eines ausgewählt aus der Reihe Esterwachs(e), Pentaeritrytoltetrastearat (PETS), langkettige Fettsäuren, Salz(e) der langkettigen Fettsäuren, Amidderivat(e) der langkettigen Fettsäuren, Montanwachse sowie niedermolekulare Polyethylen- bzw. Polypropylenwachs(e) oder Ethylen Homopolymer Wachs(e).

Bevorzugte langkettige Fettsäuren sind Stearinsäure oder Behensäure. Bevorzugte Salze langkettiger Fettsäuren sind Calciumstearat oder Zinkstearat. Bevorzugtes Amidderivat langkettiger Fettsäuren ist Ethylen-bis-stearylamid. Bevorzugte Montanwachse sind Mischungen aus geradkettigen, gesättigten Carbonsäuren mit Kettenlängen von 28 bis 32 C-Atomen.

Insbesondere bevorzugt wird als Entformungsmittel wenigstens ein Montanester mehrwertiger Alkohole, besonders bevorzugt wenigstens ein Ester geradgettiger, unverzweigter $C_{28}$ - $C_{32}$ Monocarbonsäuren mit Ethylenglykol oder Glycerin eingesetzt, der als Licowax® E [CAS No. 73138-45-1] von der Firma Clariant, Muttenz, Schweiz, bezogen werden kann.

**Komponente h)**

Erfindungsgemäß kann als Komponente h) wenigstens ein Additiv eingesetzt werden, das sich von den Komponenten b, c), d), e), f) und g) unterscheidet.

Additive der Komponente h) sind bevorzugt von Komponente d) verschiedene Stabilisatoren, insbesondere UV-Stabilisatoren, Thermostabilisatoren, Gammastrahlenstabilisatoren, Antistatika, Fließhilfsmittel, Flammschutzmittel, Elastomermodifikatoren, Brandschutzadditive, Emulgatoren, Nukleierungsmittel, Weichmacher, Gleitmittel, Farbstoffe oder Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren werden bevorzugt sterisch gehinderte Phenole, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt.

Als Farbstoffe bzw. Pigmente werden bevorzugt Zinksulfid, Titandioxid, Ultramarinblau, Eisenoxid, Ruß, Phthalocyanine, Chinacridone, Perylene, Nigrosin und Anthrachinone eingesetzt.

Das als Pigment bevorzugt einzusetzende Titandioxid hat wiederum bevorzugt eine mittlere Teilchengröße im Bereich von 90 nm bis 2000 nm. Für das erfindungsgemäß als Pigment bevorzugt einzusetzende Titandioxid kommen Titandioxid-Pigmente in Frage, deren Grundkörper nach dem Sulfat (SP)- oder Chlorid (CP)-Verfahren hergestellt sein können und die Anatas und/oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als $Al_2O_3$) und einen Sauerstoffüberschuss in der Gasphase bei der Oxidation des Titantetrachlorids zu Titandioxid von mindestens 2 %; beim SP-Grundkörper durch eine Dotierung bevorzugt mit Al, Sb, Nb oder Zn.

Bei der Verwendung von Titandioxid als Weißpigment in Farben und Lacken, Kunststoffen usw. ist bekannt, dass durch UV-Absorption erzeugte unerwünschte photokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Photoaktivität des Titandioxids dieses anorganisch nachbehandelt, besonders bevorzugt mit Oxiden von Si und / oder Al und / oder Zr und / oder durch den Einsatz von Sn-Verbindungen.

Bevorzugt ist die Oberfläche von pigmentärem Titandioxid mit amorphen Auffällungen von Oxidhydraten der Verbindungen $SiO_2$ und/oder $Al_2O_3$ und/oder Zirkonoxid bedeckt. Die $Al_2O_3$-Hülle erleichtert die Pigmentdispergierung in der Polymermartrix, die $SiO_2$-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen. Erfindungsgemäß insbesondere bevorzugt als Pigment einzusetzendes Titandioxid weist eine mittlere Teilchengröße im Bereich von 90 nm bis 2000 nm, bevorzugt im Bereich von 200 nm bis 800 nm auf. Kommerziell erhältliche Produkte sind beispielsweise Kronos® 2230, Kronos® 2225 und Kronos® vlp7000 der Fa. Kronos, Dallas, USA.

Als Nukleierungsmittel werden bevorzugt Natrium- oder Calciumphenylphosphinat, Aluminiumoxid oder Siliziumdioxid eingesetzt.

Als Weichmacher werden bevorzugt Phthalsäuredioctylester, Phthalsäuredibenzylester, Phthalsäurebutylbenzylester, Kohlenwasserstofföle oder N-(n-Butyl)benzolsulfonamid eingesetzt.

Als Elastomermodifikator einzusetzendes Additiv wird bevorzugt eines oder mehrere Pfropfpolymerisat(e) E von

E.1 5 bis 95 Gew.-%, vorzugsweise 30 bis 90 Gew.-%, wenigstens eines Vinylmonomeren auf

E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C eingesetzt.

Die Pfropfgrundlage E.2 hat im Allgemeinen eine mittlere Teilchengröße ($d_{50}$-Wert) von 0,05 bis 10 μm, vorzugsweise 0,1 bis 5 μm, besonders bevorzugt 0,2 bis 1 μm.

Monomere E.1 sind vorzugsweise Gemische aus

E.1.1 50 bis 99 Gew.-% Vinylaromaten und/oder kernsubstituierten Vinylaromaten, insbesondere Styrol, α-Methylstyrol, p-Methylstyrol, p-Chlorstyrol, und/oder Methacrylsäure-($C_1$-$C_8$)-Alkylester, insbesondere Methylmethacrylat, Ethylmethacrylat, und

E.1.2 1 bis 50 Gew.-% Vinylcyanide, insbesondere Acrylnitril und Methacrylnitril, und/oder (Meth) Acrylsäure-($C_1$-$C_8$)-Alkylester, insbesondere Methylmethacrylat, n-Butylacrylat, t-Butylacrylat, und/oder Derivate, insbesondere Anhydride und Imide, ungesättigter Carbonsäuren, insbesondere Maleinsäureanhydrid und N-Phenyl-Maleinimid.

Bevorzugte Monomere E.1.1 sind ausgewählt aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind insbesondere Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke, insbesondere auf Basis Butadien, Isopren etc., oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 <10°C, vorzugsweise <0°C, besonders bevorzugt <-10°C liegt.

Besonders bevorzugt ist als Pfropfgrundlage E.2. reiner Polybutadienkautschuk.

Besonders bevorzugte Polymerisate E sind ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt mindestens 30 Gew.-%, vorzugsweise mindestens 40 Gew.-% (in Toluol gemessen). ABS bedeutet Acrylnitril-Butadien-Styrol-Copolymerisat mit der CAS- Nummer 9003-56-9 und ist ein synthetisches Terpolymer aus den drei unterschiedlichen Monomerarten Acrylnitril, 1,3-Butadien und Styrol. Es gehört zu den amorphen Thermoplasten. Die Mengenverhältnisse können dabei variieren von 15-35 % Acrylnitril, 5-30 % Butadien und 40-60 % Styrol.

Die Elastomermodifikatoren bzw. Pfropfcopolymerisate E werden durch radikalische Polymerisation, vorzugsweise durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Propfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren sind. Zu den bevorzugten polymerisierbaren Acrylsäureestern gehören $C_1$-$C_8$-Alkylester, bevorzugt Methyl-, Ethyl-, Butyl-, n-Octyl- und 2-Ethylhexylester; Halogenalkylester, vorzugsweise Halogen-$C_1$-$C_8$-alkyl-ester, insbesondere bevorzugt Chlorethylacrylat sowie Mischungen dieser Monomeren.

Zur Vernetzung können Monomere mit mehr als einer polymerisierbaren Doppelbindung copolymerisiert werden. Bevorzugte zu vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft,

die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind insbesondere Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Als Flammschutzmittel einzusetzende Additive werden handelsübliche organische Halogenverbindungen mit oder ohne Synergisten oder handelsübliche halogenfreie Flammschutzmittel auf Basis von organischen oder anorgansichen Phosphorverbindungen unterschiedlich von Komponente d) oder organische Stickstoffverbindungen, einzeln oder im Gemisch, eingesetzt.

Als halogenhaltige, insbesondere bromierte und chlorierte Verbindungen seien bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol und bromierte Polyphenylenether genannt. Als Phosphorverbindungen sind die Phosphorverbindungen gemäß WO-A 98/17720 (= US-A 6 538 024) geeignet, bevorzugt Metallphosphinate, insbesondere Aluminiumphosphinat und Zinkphosphinat, Metallphosphonate, insbesondere Aluminiumphosphonat, Calciumphosphonat und Zinkphosphonat sowie die entsprechenden Hydrate der Metallphosphonate, außerdem Derivate der 9,10-Dihydro-9-oxa-10-phosphaphenanthren-10-oxide (DOPO-Derivate)], Triphenylphosphat (TPP), Resorcinol-bis-(diphenylphosphat) (RDP), einschließlich Oligomere sowie Bisphenol-A-bis-diphenylphosphat (BDP) einschließlich Oligomere, Polyphosphonate wie (z.B. Nofia™ HM1100 der Fa. FRX Polymers, Chelmsford, USA) ferner Zink-bis(diethylphosphinat), Aluminium-tris(diethylphosphinat), Melaminphosphat, Melaminpyrophosphat, Melaminpolyphosphat, Melamin-poly(aluminiumphosphat), Melamin-poly(zinkphosphat) und Phenoxyphosphazenoligomere und deren Mischungen. Als Stickstoffverbindungen kommen insbesondere Melamin und Melamincyanurat und Reaktionsprodukte aus Trichlortriazin, Piperazin und Morpholin gemäß CAS-Nr. 1078142-02-5 (z.B. MCA PPM Triazin HF der Fa. MCA Technologies GmbH, Biel-Benken, Schweiz) in Frage. Als Synergisten sind bevorzugt Antimonverbindungen, insbesondere Antimontrioxid und Antimonpentoxid, Zinkverbindungen, Zinnverbindungen, insbesondere Zinkstannat und Borate, insbesondere Zinkborate geeignet. Auch können dem Flammschutzmittel sogenannte Kohlenstoffbildner, insbesondere Polyphenylenether und Antidrippingmittel wieTetrafluorethylenpolymerisate zugesetzt werden

Von den halogenhaltigen Flammschutzmitteln werden besonders bevorzugt Ethylen-1,2-bistetrabromphthalimid, Tetrabrombisphenol-A-oligocarbonat, Polypentabrom-benzylacrylat oder bromiertes Polystyrol, insbesondere Firemaster® PBS64 (Fa. Great Lakes, West Lafayette, USA) jeweils in Kombination mit Antimontrioxid und/oder Aluminium-tris(dietylphosphinat) eingesetzt,

Unter den halogenfreien Flammschutzmitteln werden besonders bevorzugt Aluminium-tris(diethylphosphinat) in Kombination mit Melaminpolyphosphat und/oder Melamincyanurat und/oder Phenoxyphosphazenoligomere eingesetzt.

Insbesondere ganz besonders bevorzugt kann Aluminium-tris(diethylphosphinat) (CAS Nr. 225789-38-8) auch als alleiniges Flammschutzmittel eingesetzt werden.

Unabhängig von der Komponente c) können als Additive zusätzliche Füll- und/oder Verstärkungsstoffe in den erfindungsgemäßen Zusammensetzungen enthalten sein.

Bevorzugt wird aber auch eine Mischung aus zwei oder mehr unterschiedlichen Füllstoffen und/oder Verstärkungsstoffen, insbesondere auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffe auf der Basis von Kohlenstofffasern eingesetzt. Bevorzugt werden mineralische teilchenförmige Füllstoffe auf der Basis von Glimmer, Silikat, Quarz, Wollastonit, Kaolin, amorphe Kieselsäuren, Magnesiumcarbonat, Kreide, Feldspat oder Bariumsulfat eingesetzt. Besonders bevorzugt werden erfindungsgemäß mineralische teilchenförmige Füllstoffe auf der Basis von Wollastonit oder Kaolin eingesetzt.

Besonders bevorzugt werden ferner auch nadelförmige mineralische Füllstoffe als Additiv eingesetzt. Unter nadelförmigen mineralischen Füllstoffen wird erfindungsgemäß ein mineralischer Füllstoff mit stark ausgeprägtem nadelförmigen Charakter verstanden. Insbesondere seien nadelförmige Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäß einzusetzenden nadelförmigen Mineralien liegt bevorzugt bei kleiner 20 $\mu$m, besonders bevorzugt bei kleiner 15 $\mu$m, insbesondere bevorzugt bei kleiner 10 $\mu$m bestimmt mit einem CILAS GRANULOMETER.

Wie bereits oben bei der Komponente c) beschrieben, kann in einer bevorzugten Ausführungsform auch der als Additiv einzusetzende Füllstoff und/oder Verstärkungsstoff oberflächenmodifiziert sein, besonders bevorzugt mit einem Haftvermittler bzw. Haftvermittlersystem, insbesondere bevorzugt auf Silanbasis. Die Vorbehandlung ist jedoch

nicht unbedingt erforderlich.

Für die Oberflächenmodifizierung der als Additiv einzusetzenden Füllstoffe werden die Silanverbindungen im Allgemeinen in Mengen im Bereich von 0,05 bis 2 Gew.-%, vorzugsweise im Bereich von 0,25 bis 1,5 Gew.-% und insbesondere im Bereich von 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe.

In einer bevorzugten Ausführungsform betrifft die vorliegende Erfindung Zusammensetzungen enthaltend PBT, PET, triklin-pinakoidales Aluminiumsilikat, Glasfasern und wenigstens einen Phosphitstabilisator, bevorzugt Hostanox® P-EPQ, insbesondere das im Hostanox® P-EPQ enthaltene Tetrakis(2,4-di-tert-butylphenyl)-1,1-biphenyl-4,4'-diyl-bisphosphonit.

In einer besonders bevorzugten Ausführungsform betrifft die vorliegende Erfindung Zusammensetzungen enthaltend PBT, PET, triklin-pinakoidales Aluminiumsilikat, Glasfasern, wenigstens einen Phosphitstabilisator, bevorzugt Hostanox® P-EPQ, insbesondere das im Hostanox® P-EPQ enthaltene Tetrakis(2,4-di-tert-butylphenyl)-1,1-biphenyl-4,4'-diylbisphosphonit, und wenigstens ein Entformungsmittel, bevorzugt wenigstens einen Montanester mehrwertiger Alkohole, besonders bevorzugt wenigstens einen Ester geradgettiger, unverzweigter $C_{28}$ - $C_{32}$ Monocarbonsäuren mit Ethylenglykol oder Glycerin.

## Verwendung

Die vorliegende Erfindung betrifft aber auch die Verwendung der erfindungsgemäßen Zusammensetzungen in Form von Formmassen zur Herstellung von Erzeugnissen mit hoher Glühdrahtbeständigkeit, bevorzugt elektrischer und elektronischer Baugruppen und Komponenten, insbesondere bevorzugt Haushaltsgeräte.

Die erfindungsgemäß für den Spritzguss oder für die Extrusion einzusetzenden Formmassen erhält man, indem man die einzelnen Komponenten der erfindungsgemäßen Zusammensetzungen in einem Mischwerkzeug vermischt, durch wenigstens einen Mischwerkzeugauslass zu einem Strang austrägt, bis zur Granulierfähigkeit abkühlt und granuliert.

Bevorzugt erfolgt das Vermischen im Mischwerkzeug bei Temperaturen im Bereich von 285 bis 310°C in der Schmelze. Bevorzugt wird als Mischwerkzeug ein Extruder, besonders bevorzugt ein Zweiwellenextruder eingesetzt.

In einer Ausführungsform wird das Granulat, das die erfindungsgemäße Zusammensetzung enthält, bei 120°C im Vakuumtrockenschrank für ca. 2h getrocknet, bevor es dem Spritzguss oder einem Extrusionsverfahren zwecks Herstellung von Erzeugnissen unterzogen wird.

## Verfahren

Die vorliegende Erfindung betrifft aber auch ein Verfahren zur Herstellung von Erzeugnissen, bevorzugt von Erzeugnissen mit verbesserter Glühdrahtbeständigkeit für die Elektro- oder Elektronikindustrie, besonders bevorzugt elektronischer oder elektrischer Baugruppen und Komponenten, ganz besonders bevorzugt Haushaltsgeräte, indem man die einzelnen Komponenten in den angegebenen Mengen in einem Mischwerkzeug vermischt, durch wenigstens einen Mischwerkzeugauslass zu einem Strang austrägt, bis zur Granulierfähigkeit abkühlt und granuliert und das Granulat dem Spritzguss oder einem Extrusionsverfahren unterzieht.

Die vorliegende Erfindung betrifft aber auch ein Verfahren zur Verbesserung der Glühdrahtbeständigkeit Polyester-basierter Erzeugnisse, dadurch gekennzeichnet, dass man erfindungsgemäße Zusammensetzungen in Form von Formmassen durch Spritzguss oder Extrusion verarbeitet.

Die Verfahren des Spritzgusses sowie der Extrusion thermoplastischer Formmassen sind dem Fachmann bekannt. Erfindungsgemäße Verfahren zur Herstellung von Erzeugnissen durch Extrusion oder Spritzguss werden bei Schmelzetemperaturen im Bereich von 230 bis 330°C, bevorzugt im Bereich von 250 bis 300°C, sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar durchgeführt.

Bei der sequentiellen Coextrusion, einer Form der Extrusion, werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seite 127-129).

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt. Man unterscheidet

1. Plastifizieren / Aufschmelzen

2. Einspritzphase (Füllvorgang)

3. Nachdruckphase (wegen thermischer Kontraktion bei der Kristallisation)

4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat enthaltend die erfindungsgemäße Zusammensetzung aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung.

Im Gegensatz zum Spritzguss wird bei der Extrusion ein endlos geformter Kunststoffstrang enthaltend die erfindungsgemäße Zusammensetzung im Extruder eingesetzt, wobei der Extruder eine Maschine zur Herstellung thermoplastischer Formstücke ist. Man unterscheidet

- Einschneckenextruder und Doppelschneckenextruder sowie die jeweiligen Untergruppen
- konventioneller Einschneckenextruder, förderwirksamer Einschneckenextruder,
- gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft schließlich auch Erzeugnisse, insbesondere glühdrahtbeständige Erzeugnisse, erhältlich durch Extrusion oder Spritzguss der erfindungsgemäßen Zusammensetzungen.

**Beispiele:**

**Einsatzstoffe:**

**PBT:** Polybutylenterephthalat Pocan® B1100 der Lanxess Deutschland GmbH, Köln, Deutschland

**PET:** Polyester Chips PET V004 von der Firma Invista, Wichita, USA

**Phosphitstabilisator:** Hostanox® P-EPQ der Clariant International Ltd., Muttenz, Schweiz

**Talkum:** Mistron® R10 von Imerys Talc Group, Toulouse, Frankreich (Rio Tinto Group)

**Entformungsmittel:** Licowax® E der Clariant International Ltd., Muttenz, Schweiz

**Glasfaser:** CS 7967 (26/1493)D der Lanxess Deutschland GmbH, Köln, Deutschland

**Kyanit:** Aluminiumsilikat-Partikel in triklin pinakoidaler Kristallform, Silatherm® T1360-EST, Quarzwerke GmbH, Frechen, Deutschland.

**Flammschutzmittel (FSM)**

**FSM 1:** Melamincyanurat, Melapur® MC25, BASF, Ludwigshafen, Deutschland

**FSM 2:** Bisphenol-A-Diphosphat (CAS-Nr. 61261-37-8), **FSM 3:** Bisphenol-A-Epoxyoligomer (CAS-Nr. 728911-06-6),

**FSM 4:** Antimontrioxid 80% in PBT

**Versuchsdurchführung:**

Zur Herstellung der erfindungemäß beschriebenen Zusammensetzungen wurden die einzelnen Komponenten in einem Zweiwellenextruder (ZSK 26 Mega Compounder der Fa. Coperion Werner & Pfleiderer, (Stuttgart, Deutschland, mit 3-Loch Düsenplatte und einem Düsenlochdurchmesser von 3mm) bei Temperaturen im Bereich von 260 bis 280°C in der Schmelze vermischt, als Strang ausgetragen, bis zur Granulierfähigkeit abgekühlt und granuliert. Vor weiteren Schritten wurde das Granulat bei 120°C im Vakuumtrockenschrank für ca. 2h getrocknet.

Die Platten und Prüfkörper für die in der Tabelle 1 aufgeführten Untersuchungen wurden auf einer handelsüblichen Spritzgießmaschine bei einer Massetemperatur von 260°C und einer Werkzeugtemperatur von 80°C verspritzt.

**Bestimmung des GWFI**

Der Glow Wire Flammability Index (GWFI) wurde normgerecht nach IEC/EN 60695-2-12 ermittelt.

**Bestimmung der GWIT**

Die Glow Wire Ignition Temperature (GWIT) wurde normgerecht nach IEC/EN 60695-2-13 ermittelt.

**Thermogravimetrische Analyse (TGA)**

Zur Bewertung der thermischen Stabilität, welche das Verarbeitungsfenster maßgeblich mitbestimmt, wurde eine thermogravimetrische Analyse (TGA) durchgeführt. Hierzu wurde die Probe in einer vakuumdichten Thermo-Mikrowaage (Typ: Netzsch TG209 F1 Iris) mit einer Geschwindigkeit von 20,0 K/min erhitzt und die Massenänderung über der Temperatur aufgezeichnet. Die Temperatur bei welcher ein kumulierter Masseverlust von 2% auftrat, wurde als Temperatur T(Z) (= Zersetzungstemperatur) definiert, bei welcher eine thermische Stabilität nicht mehr in ausreichendem Maße gegeben war.

**Tabelle 1:**

| | | | Beispiel | Vergleichsbeispiel 1 | Vergleichsbeispiel 2 | Vergleichsbeispiel 3 | Vergleichsbeispiel 4 |
|---|---|---|---|---|---|---|---|
| PBT | [%] | | 5,8 | 5,8 | 5,8 | 37,8 | 28,8 |
| PET | [%] | | 28,3 | 28,3 | 28,3 | 28,3 | 28,3 |
| Phosphitstabilisator | [%] | | 0,1 | 0,1 | 0,1 | 0,1 | 0,1 |
| Entformungsmittel | [%] | | 0,8 | 0,8 | 0,8 | 0,8 | 0,8 |
| Glasfaser | [%] | | 15 | 15 | 15 | 15 | 15 |
| Kyanit | [%] | | 50 | 0 | 0 | 0 | 0 |
| Zinksulfid | [%] | | 0 | 50 | 0 | 0 | 0 |
| Titandioxid | [%] | | 0 | 0 | 50 | 0 | 0 |
| Flammschutzmittel 1 | [%] | | 0 | 0 | 0 | 0 | 12 |
| Flammschutzmittel 2 | [%] | | 0 | 0 | 0 | 0 | 15 |
| Flammschutzmittel 3 | [%] | | 0 | 0 | 0 | 12 | 0 |
| Flammschutzmittel 4 | [%] | | 0 | 0 | 0 | 6 | 0 |
| | | | | | | | |
| GWIT(1.5mm) 775°C | | | passed | failed | failed | --- | passed |
| GWFI(1.5mm) 850°C | | | passed | failed | failed | passed | --- |
| | | | | | | | |
| T(Z) | [°C] | | >350 | >350 | >350 | <350 | <350 |

Wie aus Tabelle 1 ersichtlich, wurden mit erfindungsgemäßen Zusammensetzungen sowohl der GWIT als auch der GWFI, wie für unbeaufsichtigte Haushaltsgeräte nach IEC60335-1 gefordert, erfüllt (passed = erfüllt; failed = nicht bestanden). Des Weiteren wurde ein Masseverlust von 2% erst bei Temperaturen oberhalb 350°C erreicht. Demgegenüber wurden mit anderen Mineralien (Vergleichsbeispiele 1 und 2) die Glühdrahtanforderungen nach IEC60335-1 nicht erfüllt. Mit halogenhaltigen Flammschutzmitteln (Vergleichsbeispiel 3) und halogenfreien Flammschutzmitteln (Vergleichsbeispiel 4) konnten die geforderten GWFI- bzw. GWIT-Werte erfüllt werden. Demgegenüber hatten diese Materialien aufgrund der früheren Zersetzung der Flammschutzmittel eine deutlich tiefere T(Z) und damit ein kleineres Verarbeitungsfenster.

## Patentansprüche

**1.** Zusammensetzungen enthaltend

a) wenigstens ein Polyalkylenterephthalat,
b) wenigstens Aluminiumsilikat mit triklin-pinakoidaler Kristallstruktur, und
c) Glasfasern.

**2.** Zusammensetzungen gemäß Anspruch 1, **dadurch gekennzeichnet, dass** als Polyalkylenterephthalat Polybutylenterephthalat (PBT), Polyethylenterephthalat (PET) oder Blends aus PBT und PET, besonders bevorzugt Blends aus PBT und PET, insbesondere Blends aus PBT und PET, worin der PET Anteil bezogen auf die Summe aller enthaltenen Polyester im Bereich von 50 bis 99,9 Gew-% liegt, eingesetzt werden.

**3.** Zusammensetzungen gemäß einem der Ansprüche 1 oder 2, **dadurch gekennzeichnet, dass** diese

a) 24,9 bis 89,9 Gew.-% wenigstens eines Polyalkylenterephthalats,
b) 10 bis 75 Gew.-% wenigstens Aluminiumsilikat mit triklin-pinakoidaler Kristallstruktur und
c) 0,1 bis 50 Gew.-% Glasfasern

enthalten, mit der Maßgabe, dass die Summe aller Gewichtsprozente stets 100 ergibt.

**4.** Zusammensetzungen gemäß einem der Ansprüche 1 bis 3, **dadurch gekennzeichnet, dass** diese zusätzlich zu den Komponenten a) bis c) noch

d) 0,01 bis 5 Gew.-%, bezogen auf die Gesamtzusammensetzung, wenigstens eines Phosphitstabilisators enthalten, wobei die Komponenten a), b), c) soweit reduziert werden, dass die Summe aller Gewichtsprozente stets 100 ergibt.

**5.** Zusammensetzungen gemäß einem der Ansprüche 1 bis 4, **dadurch gekennzeichnet, dass** diese zusätzlich zu den Komponenten a) bis d) oder anstelle von d) noch e) 0,01 bis 10 Gew.%, bezogen auf die Gesamtzusammensetzung, wenigstens eines Fließhilfsmittels enthalten, wobei die übrigen Komponenten soweit reduziert werden, dass die Summe aller Gewichtsprozente stets 100 ergibt.

**6.** Zusammensetzungen gemäß einem der Ansprüche 1 bis 5, **dadurch gekennzeichnet, dass** diese zusätzlich zu den Komponenten a) bis d) oder anstelle von d) und/oder e) noch

f) 0,01 bis 15 Gew.-%, bezogen auf die Gesamtzusammensetzung, Talkum enthalten, bevorzugt mikrokristallines Talkum, wobei die übrigen Komponenten soweit reduziert werden, dass die Summe aller Gewichtsprozente stets 100 ergibt.

**7.** Zusammensetzungen gemäß einem der Ansprüche 1 bis 6, **dadurch gekennzeichnet, dass** diese zusätzlich zu den Komponenten a) bis e) oder anstelle der Komponenten d) und/oder e) und/oder f) noch

g) 0,01 bis 15 Gew.-%, bezogen auf die Gesamtzusammensetzung, wenigstens eines Entformungsmittels enthalten, wobei die übrigen Komponenten soweit reduziert werden, dass die Summe aller Gewichtsprozente stets 100 ergibt.

**8.** Zusammensetzungen gemäß einem der Ansprüche 1 bis 7, **dadurch gekennzeichnet, dass** diese zusätzlich zu

den Komponenten a) bis g) oder anstelle der Komponenten d) und/oder e) und/oder f) und/oder g) noch

h) 0,01 bis 45 Gew.-%, bezogen auf die Gesamtzusammensetzung, wenigstens eines sonstigen, zu den Komponenten c) bis g) oder anstelle der Komponenten d) und/oder e) und/oder f) und/oder g) unterschiedlichen Additivs enthalten, wobei die übrigen Komponenten soweit reduziert werden, dass die Summe aller Gewichtsprozente stets 100 ergibt.

**9.** Zusammensetzungen gemäß einem der Ansprüche 4 bis 8, **dadurch gekennzeichnet, dass** ein Phosphitstabilisator der Reihe Tris(2,4-ditert-butylphenyl)phosphit, Bis(2,4-di-tert-butylphenyl)pentaerythritof-diphosphit, Bis(2,6-di-terbutyl-4-methylphenyl)pentaerythritol-diphosphit, Bis(2,4-dicumylphenyl)pentaerythritol-diphosphit, Tris(nonylphenyl)phosphit, (2,4,6-tri-t-butylphenol)2-butyl-2-ethyl-1,3-propanediol-phosphit oder Hostanox® P-EPQ eingesetzt wird, wobei letzteres Tetrakis(2,4-di-tert-butylphenyl)-1,1-biphenyl-4,4'-diylbisphosphonit enthält.

**10.** Zusammensetzungen gemäß einem der Ansprüche 7 bis 9, **dadurch gekennzeichnet, dass** als Entformungsmittel wenigstens eines ausgewählt aus der Reihe Esterwachs(e), Pentaeritrytoltetrastearat (PETS), langkettige Fettsäuren, Salz(e) der langkettigen Fettsäuren, Amidderivat(e) der langkettigen Fettsäuren, Montanwachse sowie niedermolekulare Polyethylen- bzw. Polypropylenwachs(e) oder Ethylen Homopolymer Wachs(e) eingesetzt wird, bevorzugt ein Montanester mehrwertiger Alkohole, besonders bevorzugt ein Ester geradkettiger, unverzweigter $C_{28}$ - $C_{32}$ Monocarbonsäuren mit Ethylenglykol oder Glycerin.

**11.** Verwendung der Zusammensetzungen gemäß einem der Ansprüche 1 bis 10 in Form von Formmassen zur Herstellung von Erzeugnissen mit hoher Glühdrahtbeständigkeit, bevorzugt elektrischer und elektronischer Baugruppen und Komponenten, insbesondere bevorzugt Haushaltsgeräte.

**12.** Verwendung gemäß Anspruch 11, **dadurch gekennzeichnet, dass** die Formmassen im Spritzguss oder in der Extrusion eingesetzt werden.

**13.** Verfahren zur Herstellung von Erzeugnissen, **dadurch gekennzeichnet, dass** man die einzelnen Komponenten der Zusammensetzungen gemäß einem der Ansprüche 1 bis 10 in den angegebenen Mengen in einem Mischwerkzeug vermischt, durch wenigstens einen Mischwerkzeugauslass zu einem Strang austrägt, bis zur Granulierfähigkeit abkühlt und granuliert und das Granulat dem Spritzguss oder einem Extrusionsverfahren unterzieht.

**14.** Verfahren gemäß Anspruch 13, **dadurch gekennzeichnet, dass** das Vermischen im Mischwerkzeug bei Temperaturen im Bereich von 285 bis 310°C in der Schmelze erfolgt.

## Claims

**1.** Compositions comprising

a) at least one polyalkylene terephthalate,
b) at least aluminium silicate with triclinic-pinacoidal crystal structure, and
c) glass fibres.

**2.** Compositions according to Claim 1, **characterized in that** polyalkylene terephthalate used comprises polybutylene terephthalate (PBT), polyethylene terephthalate (PET) or a blend of PBT and PET, particularly preferably a blend of PBT and PET, in particular a blend of PBT and PET in which the PET content is in the range from 50 to 99.9% by weight, based on the entirety of all of the polyesters present.

**3.** Compositions according to either of Claims 1 and 2, **characterized in that** these comprise

a) from 24.9 to 89.9% by weight of at least one polyalkylene terephthalate,
b) from 10 to 75% by weight of at least aluminium silicate with triclinic-pinacoidal crystal structure and
c) from 0.1 to 50% by weight of glass fibres,

with the proviso that the sum of all of the percentages by weight is always 100.

**4.** Compositions according to any of Claims 1 to 3, **characterized in that** these also comprise, in addition to components

a) to c),

d) from 0.01 to 5% by weight, based on the entire composition, of at least one phosphite stabilizer, where the quantities of components a), b), c) are reduced to an extent such that the sum of all of the percentages by weight is always 100.

5. Compositions according to any of Claims 1 to 4, **characterized in that** these also comprise, in addition to components a) to d), or instead of d),

e) from 0.01 to 10% by weight, based on the entire composition, of at least one flow auxiliary, where the quantities of the other components are reduced to an extent such that the sum of all of the percentages by weight is always 100.

6. Compositions according to any of Claims 1 to 5, **characterized in that** these also comprise, in addition to components a) to d), or instead of d) and/or e)

f) from 0.01 to 15% by weight, based on the entire composition, of talc powder, preferably microcrystalline talc powder, where the quantities of the other components are reduced to an extent such that the sum of all of the percentages by weight is always 100.

7. Compositions according to any of Claims 1 to 6, **characterized in that** these also comprise, in addition to components a) to e), or instead of components d) and/or e) and/or f)

g) from 0.01 to 15% by weight, based on the entire composition, of at least one mould-release agent, where the quantities of the other components are reduced to an extent such that the sum of all of the percentages by weight is always 100.

8. Compositions according to any of Claims 1 to 7, **characterized in that** these also comprise, in addition to components a) to g) or instead of components d) and/or e) and/or f) and/or g)

h) from 0.01 to 45% by weight, based on the entire composition, of at least one other additive different from components c) to g) or instead of components d) and/or e) and/or f) and/or g), where the quantities of the other components are reduced to an extent such that the sum of all of the percentages by weight is always 100.

9. Compositions according to any of Claims 4 to 8, **characterized in that** a phosphite stabilizer from the group of tris(2,4-di-tert-butylphenyl) phosphite, bis(2,4-di-tert-butylphenyl) pentaerythritol diphosphite, bis(2,6-di-tert-butyl-4-methylphenyl) pentaerythritol diphosphite, bis(2,4-dicumylphenyl) pentaerythritol diphosphite, tris(nonylphenyl) phosphite, (2,4,6-tri-tert-butylphenol) 2-butyl-2-ethyl-1,3-propanediol phosphite or Hostanox® P-EPQ is used where the latter comprises tetrakis(2,4-di-tert-butylphenyl) 1,1-biphenyl-4,4'-diylbisphosphonite.

10. Compositions according to any of Claims 7 to 9, **characterized in that** mould-release agent used comprises at least one selected from the group of ester wax(es), pentaerythritol tetrastearate (PETS), long-chain fatty acids, salt(s) of long-chain fatty acids, amide derivative(s) of long-chain fatty acids, montan waxes and low-molecular-weight polyethylene wax(es) and low-molecular-weight polypropylene wax(es) and ethylene homopolymer wax(es), preferably a montan ester of polyhydric alcohols, particularly preferably an ester of straight-chain, unbranched $C_{28}$-$C_{32}$ monocarboxylic acids with ethylene glycol or glycerol.

11. Use of the compositions according to any of Claims 1 to 10 in the form of moulding compositions for the production of products with high glow-wire resistance, preferably of electrical and electronic modules and components, with particular preference devices for domestic use.

12. Use according to Claim 11, **characterized in that** the moulding compositions are used in injection moulding or in extrusion.

13. Process for the production of products, **characterized in that** the stated quantities of the individual components of the compositions according to any of Claims 1 to 10 are mixed in a mixer, discharged through at least one mixer outlet to give a strand, cooled until pelletizable and pelletized, and the pellets are subjected to injection moulding or to an extrusion process.

**14.** Process according to Claim 13, **characterized in that** the mixing in the mixer takes place in the melt at temperatures in the range from 285 to 310°C.

## Revendications

**1.** Compositions contenant :

a) au moins un polyalkylène téréphtalate,
b) au moins un silicate d'aluminium de structure cristalline triclinique pinacoïdale, et
c) des fibres de verre.

**2.** Compositions selon la revendication 1, **caractérisées en ce que** du polybutylène téréphtalate (PBT), du polyéthylène téréphtalate (PET) ou des mélanges de PBT et de PET, de manière particulièrement préférée des mélanges de PBT et de PET, notamment des mélanges de PBT et de PET dans lesquels la proportion de PET par rapport à la somme de tous les polyesters contenus se situe dans la plage allant de 50 à 99,9 % en poids, sont utilisés en tant que polyalkylène téréphtalate.

**3.** Compositions selon l'une quelconque des revendications 1 ou 2, **caractérisées en ce que** celles-ci contiennent :

a) 24,9 à 89,9 % en poids d'au moins un polyalkylène téréphtalate,
b) 10 à 75 % en poids d'au moins un silicate d'aluminium à structure cristalline triclinique pinacoïdale, et
c) 0,1 à 50 % en poids de fibres de verre,

à condition que la somme de tous les pourcentages en poids soit toujours de 100.

**4.** Compositions selon l'une quelconque des revendications 1 à 3, **caractérisées en ce que** celles-ci contiennent en plus des composants a) à c) également d) 0,01 à 5 % en poids, par rapport à la composition totale, d'au moins un stabilisateur phosphite, les composants a), b), c) étant réduits de telle sorte que la somme de tous les pourcentages en poids soit toujours de 100.

**5.** Compositions selon l'une quelconque des revendications 1 à 4, **caractérisées en ce que** celles-ci contiennent en plus des composants a) à d) ou à la place de d) également

e) 0,01 à 10 % en poids, par rapport à la composition totale, d'au moins un adjuvant d'écoulement, les autres composants étant réduits de telle sorte que la somme de tous les pourcentages en poids soit toujours de 100.

**6.** Compositions selon l'une quelconque des revendications 1 à 5, **caractérisées en ce que** celles-ci contiennent en plus des composants a) à d) ou à la place de d) et/ou e) également

f) 0,01 à 15 % en poids, par rapport à la composition totale, de talc, de préférence de talc microcristallin, les autres composants étant réduits de telle sorte que la somme de tous les pourcentages en poids soit toujours de 100.

**7.** Compositions selon l'une quelconque des revendications 1 à 6, **caractérisées en ce que** celles-ci contiennent en plus des composants a) à e) ou à la place des composants d) et/ou e) et/ou f) également g) 0,01 à 15 % en poids, par rapport à la composition totale, d'au moins un agent de démoulage, les autres composants étant réduits de telle sorte que la somme de tous les pourcentages en poids soit toujours de 100.

**8.** Compositions selon l'une quelconque des revendications 1 à 7, **caractérisées en ce que** celles-ci contiennent en plus des composants a) à g) ou à la place des composants d) et/ou e) et/ou f) et/ou g) également

h) 0,01 à 45 % en poids, par rapport à la composition totale, d'au moins un autre additif différent des composants c) à g) ou à la place des composants d) et/ou e) et/ou f) et/ou g), les autres composants étant réduits de telle sorte que la somme de tous les pourcentages en poids soit toujours de 100.

**9.** Compositions selon l'une quelconque des revendications 4 à 8, **caractérisées en ce qu'**un stabilisateur phosphite de la série constituée par le phosphite de tris(2,4-di-tert-butylphényle), le diphosphite de bis(2,4-di-tert-butylphényl)pentaérythritol, le diphosphite de bis(2,6-di-tert-butyl-4-méthyl-phényl)pentaérythritol, le diphosphite de bis(2,4-dicumylphényl)pentaérythritol, le phosphite de tris(nonylphényle), le phosphite de (2,4,6-tri-t-butylphénol)2-butyl-2-éthyl-1,3-propanediol ou Hostanox® P-EPQ est utilisé, ce dernier contenant du bisphosphonite de tétrakis(2,4-di-tert-butylphényl)-1,1-biphényl-4,4'-diyle.

**10.** Compositions selon l'une quelconque des revendications 7 à 9, caractérisées en en ce qu'en tant qu'agent de démoulage, au moins un choisi dans la série constituée par une ou plusieurs cires d'esters, le tétrastéarate de pentaérythritol (PETS), les acides gras à chaîne longue, un ou plusieurs sels des acides gras à chaîne longue, un ou plusieurs dérivés d'amides des acides gras à chaîne longue, les cires de lignite, ainsi qu'une ou plusieurs cires de polyéthylène ou de polypropylène de faible poids moléculaire ou une ou plusieurs cires d'homopolymère d'éthylène, est utilisé, de préférence un ester de lignite d'alcools polyvalents, de manière particulièrement préférée un ester d'acides monocarboxyliques en $C_{28}$-$C_{32}$ linéaires, non ramifiés avec de l'éthylène glycol ou de la glycérine.

**11.** Utilisation des compositions selon l'une quelconque des revendications 1 à 10 sous la forme de matériaux de moulage pour la fabrication d'articles présentant une résistance à un filament incandescent élevée, de préférence des sous-composants et des composants électriques et électroniques, de manière particulièrement préférée des appareils ménagers.

**12.** Utilisation selon la revendication 11, **caractérisée en ce que** les matériaux de moulage sont utilisés dans le moulage par injection ou dans l'extrusion.

**13.** Procédé de fabrication d'articles, **caractérisé en ce que** les composants individuels des compositions selon l'une quelconque des revendications 1 à 10 sont mélangés en les quantités indiquées dans un outil de mélange, déchargés sous la forme d'un câble par au moins une sortie de l'outil de mélange, refroidis jusqu'à pouvoir être granulés, et granulés, et le granulat est soumis au moulage par injection ou à un procédé d'extrusion.

**14.** Procédé selon la revendication 13, **caractérisé en ce que** le mélange dans l'outil de mélange a lieu à des températures dans la plage allant de 285 à 310 °C dans la masse fondue.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2006117087 A1
- WO 2010080491 A1
- WO 03018680 A2
- DE 2407674 A
- US 4035958 A
- DE 2407776 A
- DE 2715932 A
- US 4176224 A
- DE 1900270 A
- US 3692744 A
- DE 2035390 A
- US 3644574 A
- DE 2248242 A
- GB 1409275 A
- US 4937285 A
- DE 3704657 A
- US 4859740 A
- DE 3704655 A
- US 4861831 A
- DE 3631540 A
- US 4806593 A
- DE 3631539 A
- US 4812515 A
- WO 9817720 A
- US 6538024 A


### In der Beschreibung aufgeführte Nicht-Patentliteratur


- Kunststoff-Handbuch. Karl-Hanser-Verlag, 1973, vol. VIII, 695-743 ff
- *CHEMICAL ABSTRACTS,* 1302-76-7
- *CHEMICAL ABSTRACTS,* 1344-28-1
- *CHEMICAL ABSTRACTS,* 10043-11-5
- *CHEMICAL ABSTRACTS,* 31570-04-4
- *CHEMICAL ABSTRACTS,* 26741-53-7
- *CHEMICAL ABSTRACTS,* 80693-00-1
- *CHEMICAL ABSTRACTS,* 154862-43-8
- *CHEMICAL ABSTRACTS,* 26523-78-4
- *CHEMICAL ABSTRACTS,* 161717-32-4
- *CHEMICAL ABSTRACTS,* 119345-01-6
- *CHEMICAL ABSTRACTS,* 38613-77-3
- *CHEMICAL ABSTRACTS,* 14807-96-6
- *CHEMICAL ABSTRACTS,* 73138-45-1
- **GÄCHTER ; MÜLLER.** Kunststoff-Additive. Hanser-Verlag, 1989
- Plastics Additives Handbook. Hanser-Verlag, 2001
- **ULLMANN.** Enzyklopädie der Technischen Chemie. 1980, vol. 19, 280 ff
- *CHEMICAL ABSTRACTS,* 9003-56-9
- *CHEMICAL ABSTRACTS,* 1078142-02-5
- *CHEMICAL ABSTRACTS,* 225789-38-8
- **THIELEN ; HARTWIG ; GUST.** Blasformen von Kunststoffhohlkörpern. Carl Hanser Verlag, 2006, 127-129
- *CHEMICAL ABSTRACTS,* 61261-37-8
- *CHEMICAL ABSTRACTS,* 728911-06-6